**Europäisches Patentamt**

**European Patent Office**

**Office européen des brevets**

(19)

(11) Veröffentlichungsnummer: **0 112 533**
**B1**

(12) # EUROPÄISCHE PATENTSCHRIFT

(45) Veröffentlichungstag der Patentschrift:
21.09.88

(51) Int. Cl.⁴: **B 60 C 11/00**

(21) Anmeldenummer: **83112476.3**

(22) Anmeldetag: **12.12.83**

(54) M + S-Laufflächenprofil für Fahrzeugluftreifen.

(30) Priorität: 22.12.82 DE 3247465
13.08.83 DE 3329320

(43) Veröffentlichungstag der Anmeldung:
04.07.84 Patentblatt 84/27

(45) Bekanntmachung des Hinweises auf die Patenterteilung:
21.09.88 Patentblatt 88/38

(84) Benannte Vertragsstaaten:
AT CH FR GB LI SE

(56) Entgegenhaltungen:
DE-A-2 322 095
DE-A-2 948 479
FR-A-2 283 018
FR-A-2 475 465
LU-A-66 675

GUMMIBEREITUNG. Nr. 1, 1981, Seite 43, Beilefeld,
DE; "Neuer Hakkapeliitta-Winterreifen"

(73) Patentinhaber: **UNIROYAL ENGLEBERT Reifen
GmbH, Hüttenstrasse 7, D-5100 Aachen (DE)**

(72) Erfinder: **Senger, Gerhard Franz- Josef, Dr. Ing.
Dipl.- Ing., Bergstrasse 16, D-5106 Roetgen- Rott
(DE)**
Erfinder: **Gerresheim, Manfred, Dr. Ing. Dipl.- Ing.,
Martin- Luther- King- Strasse 42, D-5102 Würselen
(DE)**
Erfinder: **Poqué, Dionysius Josef, Dipl.- Ing.,
Meischenfeld 17, D-5100 Aachen (DE)**
Erfinder: **Vögler, Hans- Jürgen, Dipl.- Ing.,
Roggenweg 6, D-5120 Herzogenrath (DE)**
Erfinder: **Walker, Hamish Cameron, Ing. Grad., An
den Finkenweiden 39, D-5100 Aachen (DE)**

EP 0 112 533 B1

## Beschreibung

Die Erfindung bezieht sich auf ein M + S-Laufflächenprofil an Fahrzeugluftreifen in Gürtel/Radialkarkassenbauart gemäß dem Oberbegriff des Patentanspruches 1.

Ein derartiges M + S-Laufflächenprofil ist gemäß der Zeitschrift "Gummibereifung" Nr. 1, 1981, Seite 43, bekannt. Die Blockprofilelemente sind gestuft ausgebildet. Sie sind im Laufflächenmittenbereich pfeilartig gegeneinander in Umfangsrichtung und sie sind in den Schulterbereichen pfeilartig entgegen der Umfangsrichtung angeordnet. Die zahlreichen Querkanten gewährleisten eine gute Griffigkeit im Schnee und die breiten, offenen Profilrillen sichern eine gute Selbstreinigung.

Die weiter bekannten M + S-Laufflächenprofile nach DE-A-2 322 095 und FR-A-2 475 465 weisen langgestreckte, gestufte Blockprofilelemente auf. Hierdurch sind unterschiedlich steife Blockbereiche vorhanden.

Derartige M + S-Laufflächenprofile sind nach dem in Mitteleuropa erlassenen Spikeverbot zu dem Zweck entwickelt worden, möglichst mit allen im Winter vorkommenden Gegebenheiten gleichermaßen gut zurechtzukommen. Das bringt verschiedene Probleme. Sie sind als spikelose Haftreifen von Reifengeneration zu Reifengeneration bezüglich Griffigkeit immer wieder verbessert worden. Dennoch bestehen erhebliche Mängel bezüglich Spurhaltung und Drainage. Die Grundanforderungen, die an ein M + S-Laufflächenprofil gestellt werden, sind ein hohes Maß an Griffigkeit und Spurhaltung auf verschneiten Straßen und hohe Sicherheit gegen Rutschen auf schnee- und eisglatten Flächen bietende Blockkanten. In mitteleuropäischen Breiten mit häufig wechselnden Witterungsverhältnissen soll das M + S-Profil des weiteren über ein gutes Drainagevermögen, geringen Abrieb und Rollwiderstand bei verhältnismäßig gutem Fahrkomfort verfügen. Die bekannten M + S-Laufflächenprofile werden diesen Anforderungen in ungenügendem Maße gerecht.

Der Erfindung liegt die Aufgabe zugrunde, ein Laufflächenprofil nach der eingangs geschilderten Gattung zu schaffen, dessen Schnee- und Naßlaufeigenschaften durch eine neue Blockform und eine neue günstige Blockanordnung verbessert werden. Die Mängel der M + S-Laufflächenprofile bezüglich Haftung bei Kurvenfahrt und Spurhaltung sollen zuverlässig vermieden werden, ohne daß das allgemeine Fahrverhalten und der Fahrkomfort darunter leiden.

Die Blockprofilelemente sollen kompakt ausgebildet sein, damit sie sich bei Beanspruchung nicht verformen. Zusammen mit den Rillen sollen diese Profilblöcke einen Verzahnungseffekt mit dem verschneiten oder schneevermatschten Untergrund bewirken. Zugleich sollen die Profilblöcke auch eine flexible Kontaktfläche aufweisen und aufgrund ihrer Form und Anordnung gleich gut die Spurhaltung und Drainage sichern.

Erfindungsgemäß wird diese Aufgabe durch die Merkmale des Patentanspruches 1 gelöst.

Die sich quer erstreckenden Blockkanten gewährleisten eine hohe Zugkraft, also Griffigkeit, und eine drainagegünstige Querrille. Die sich schräg erstreckenden Blockkanten gewährleisten einen zusätzlichen Zugkraftanteil und einen wesentlichen Anteil zur Sicherung der Spurhaltung. Die sich längs, also parallel zur Mittenlinie, erstreckenden Blockkanten bieten hohen Widerstand gegen Querrutschen.

Aufgrund der wechselnd in und entgegen der Umfangsrichtung versetzt angeordneten Blockprofilelemente in der Querreihe wird der jeweilige Laufflächenteil bereichsweise nacheinander und übergreifend wirksam. Zugleich ist die Spurhaltung in jeder Aufstandsphase durch die Schräg- und Längskanten wirksam gewährleistet. Die Blockanordnung schafft bezüglich der Schnee- und Eiseigenschaft ein verhältnismäßig offenes, schräg orientiertes geradliniges Kurzweg-Rillensystem. Es gewährleistet jederzeit gute Drainage und bietet hohe Sicherheit bei Aquaplaningverhältnissen. Durch die im Bereich der Laufflächenmitte verlaufenden Schrägkanten der gleichen und gleichorientierten Neigung und im Bereich der Laufflächenschulter entgegengesetzt orientierten Schrägkanten liegt in beiden Schrägrichtungen eine ausreichend große Anzahl von Schrägkanten zur Sicherung der Spurhaltung vor.

Durch die bis in die Schulterrundung sich erstreckende Oberfläche der Schulterblöcke, die etwa um das 1,5 bis 2-fache größer ist als die Oberfläche der mittig angeordneten Blockprofilelemente, werden die aus der Seitenwand in das Laufflächenprofil eingeleiteten Kräfte günstig aufgeteilt und zuverlässig aufgenommen.

Nach einer bevorzugten Ausführungsform sind die Blockprofilelemente in der Querreihe derart versetzt zueinander angeordnet, daß sie in Bezug zu den benachbarten Querreihen jeweils auf Lücke angeordnet sind. Die Blockprofilelemente stehen dabei jeweils im wesentlichen mittig einer axialen Querrille gegenüber, die zwischen umfangsbenachbarten Profilblöcken vorliegen.

Um die verhältnismäßig kompakt ausgebildeten Blockprofilelemente bereichsweise elastischer auszuführen, sind sie mit Feineinschnitten versehen. Diese sind im wesentlichen quer zur Laufrichtung angeordnet. Zusätzlich erhalten die Schulter-Blockprofilelemente jeweils eine etwas größere radiale Ausnehmung, die bevorzugt rechteckförmigen Querschnitt aufweist. Die Kanten dieser Hilfsmittel stellen in der Aufstandsfläche zusätzliche Angriffskanten dar und unterstützen die Wirksamkeit der Griffigkeit und elastischen Nachgiebigkeit für gute Bodenhaftung sowohl in ihrer Schnee- als auch ihrer Naßlaufeigenschaft.

Die Feineinschnitte öffnen und schließen sich beim Einlauf in die und beim Auslauf aus der Bodenkontaktfläche. Das im Feineinschnitt sich befindende Luftvolumen wird dabei zusammengepreßt und hernach wieder entspannt. Dabei entstehen hohe Kompressionsdrücke, die sich abbauen müssen. Sie verursachen hochfrequente Geräusche, die vom Reifen abstrahlen. Insbesondere bei sehr ebenen oder feuchten Kontaktflächen sind sie deutlich wahrnehmbar. Dieses hochfrequente Geräusch als Teil der Reifenlärmemission gilt es zu verringern. Dazu sollen die Luftkompressionseffekte gemindert werden, die im wesentlichen in den Feineinschnitten und beim Ausströmen aus ihnen verursacht werden. Zu diesem Zweck wird dem Feineinschnitt ein Druckausgleichkanal zugeordnet, durch den der Druckquotient von Kompressionsdruck $P_K$ zu Ausgangsdruck $P_0$ verringert wird. Volumen und Wirkung der Feineinschnitte werden dadurch nicht beeinträchtigt.

Nach einem weiteren Merkmal der Erfindung ist an dem Feineinschnitt ein Druckausgleichkanal quer oder schräg bis zu einem Winkel von 45° zum Feineinschnitt angeschlossen. Bevorzugt sind die Feineinschnitte im wesentlichen quer zur Reifenumfangsrichtung orientiert. Die angeschlossenen Druckausgleichskanäle erstrecken sich insoweit im wesentlich in Umfangsrichtung.

Durch diese Anordnung wird bewirkt, daß das komprimierte Luftvolumen im Feineinschnitt zu einem sehr wesentlichen Teil über den Druckausgleichkanal insbesondere in Laufrichtung in die Atmosphäre entweichen kann. Der Kompressionsdruck bleibt niedriger im Vergleich zu Feineinschnitten ohne Druckausgleich. Der Druckquotient wird reduziert und als Folge hiervon wird der verursachte Geräuschanteil auf einem niedrigen Geräuschniveau gehalten.

Das Grundgeräusch des Reifens, das durch das Profil selbst verursacht wird, ist durch das günstige niedrige hochfrequente Geräusch insgesamt günstiger. Es trägt mit dazu bei, die Lärmemission von Fahrzeugen zu reduzieren.

Anhand der Zeichnung ist die Erfindung in Ausführungsbeispielen erläutert. Es zeigen

Fig. 1 eine räumliche Darstellung des M + S-Laufflächenprofils (Ausschnitt),

Fig. 2 eine Aufsicht auf die Blockprofilelemente nach Fig. 1 (Ausschnitt),

Fig. 3 eine Einzelheit der Aufstandsfläche eines Blockprofilelements,

Fig. 4 eine Aufsicht auf eine Aufstandsfläche eines weiteren Laufflächenprofils,

Fig. 5 eine Aufsicht auf die Blockprofilelemente nach Fig. 4 (Ausschnitt),

Fig. 6 eine Einzelheit des Teilquerschnitts durch ein Blockprofilelement nach Fig. 5,

Fig. 7 eine Aufsicht auf weitere Blockprofilelemente,

Fig. 8 eine Aufsicht auf weitere Blockprofilelemente.

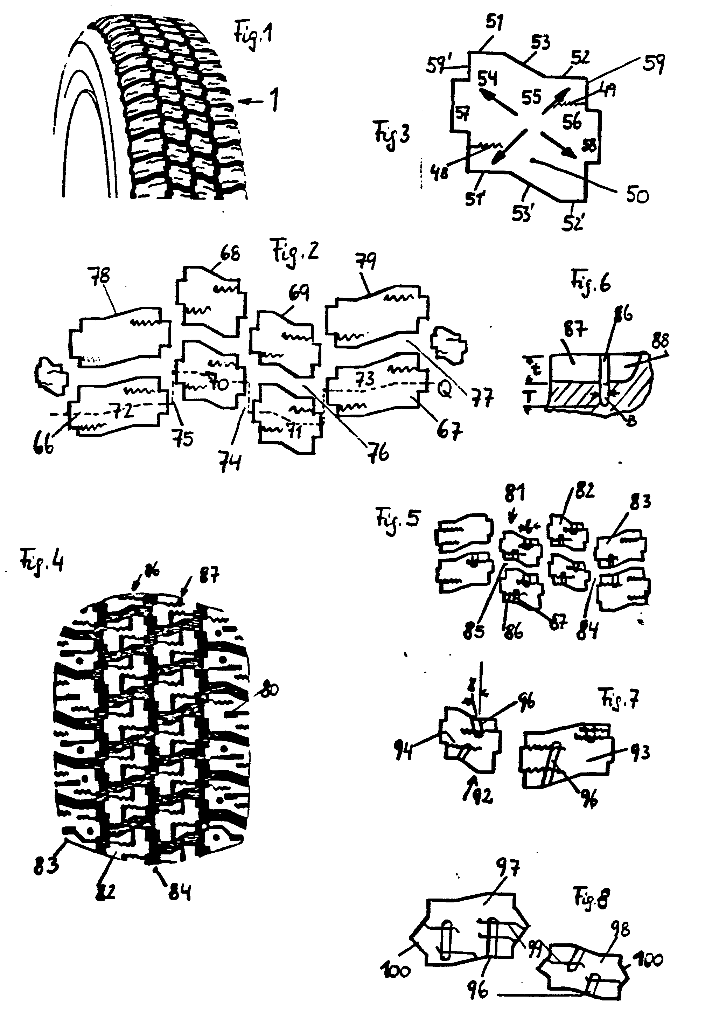

Der Fahrzeugluftreifen 1 nach Fig. 1 besteht aus Blockprofilelementen mit einer rhombusartigen Grundform. Das Grundmuster eines solchen Laufflächenprofils ist in Fig. 2 vergrößert dargestellt.

Die im Laufflächenmitterbereich angeordneten Blockprofilelemente sind mit 70, 71 und die in den Laufflächenschulterbereichen angeordneten Blockprofilelemente sind mit 72, 73 bezeichnet. Begrenzt werden diese Blockprofilelemente durch Umfangs- und Querrillen, die mit 74, 75 und 76, 77 bezeichnet sind. Die Blockprofilelemente 70 bis 73 sind in Blockumfangsreihen angeordnet und bilden gemäß ihrer versetzten Anordnung jeweils eine schrägorientierte Querreihe Q.

Die rhombusartige Grundform der Aufstandsfläche 50 ist in Fig. 3 dargestellt. Die Grundform wird gebildet aus den rechteckigen Außenbereichen 54 und 56, an die jeweils ein nasenförmiger seitlicher Ansatz 57, 58 angeschlossen ist. Der Zwischenbereich zwischen den Außenbereichen ist mit 55 bezeichnet. Anstelle der gestuften Ansätze 57, 58 können die Längskanten des Blockprofilelements auch gezackt oder gepfeilt, wie dies bei 100 an Blockprofilelementen 97, 98 in Fig. 8 erkennbar ist, ausgebildet sein.

Die parallel zur Umfangsmittenebene verlaufenden Längskanten sind mit 59, 59' und die quer verlaufenden Blockkanten sind mit 51, 52 sowie 51', 52' bezeichnet. Der Zwischenbereich 55 ist mit in zur Umfangsrichtung schrägen, unter einem Winkel von 10 bis 45 Grad geneigten parallelen Blockkanten 53, 53' versehen. Vorhandene Feineinschnitte sind mit 48, 49 bezeichnet. Sie verlaufen im wesentlichen quer zur Umfangsmittenebene.

Gemäß Fig. 2 sind zwei solcher Blockprofilelemente 70, 71 in der Laufflächenmitte angeordnet. Die Schrägkanten 68, 69 dieser beiden Blockprofilelemente weisen die gleiche Neigung und die gleiche Neigungsrichtung auf.

Die in den Schulterbereichen angeordneten Blockprofilelemente 72, 73 weisen Schrägkanten 78, 79 auf, die die gleiche Neigung, jedoch unterschiedliche Neigungsrichtung zu den Schrägkanten der laufflächenmittigen Blockprofilelemente aufweisen.

Die Blockbereiche 66, 67 der Blockprofilelemente in den Schulterbereichen erstrecken sich in den Schulter/Seitenbereich hinein. Die Querkanten der Blockprofilelemente, die durch die Schrägkanten versetzt vorliegen, gewährleisten hohe Zugkraft, d. i. Griffigkeit in der Aufstandsfläche, wobei der Kantenversatz wie ein Schanier wirkt. Die Querkanten sind für hohe Selbstreinigung und Entwässerung maßgeblich an der einfachen, geradlinigen Rillenausbildung beteiligt.

Diese Rillen gewährleisten die Aufnahme großer Wasser-, Matsch- oder Schneevolumina, eine rasche Ableitung dieser Volumina bzw.

Befreiung von Schnee, und sie gewährleisten jederzeit, daß die günstige Wasserableitung in der Aufstandsfläche nicht abreißt. Die schrägen Kanten sind sowohl für die Zugkraft als auch für die Spurhaltung maßgebend. Die in Querrichtung sich erstreckende Komponente unterstützt die Zugkraft und die in Längsrichtung verlaufende Komponente unterstützt die Angriffsfläche gegen Verrutschen. Die Schrägkante beeinflußt den Verlauf der Blockkanten in Querrichtung. Die Schrägkante beeinflußt vorteilhaft die Kontur der Querrille, die dadurch einen leicht geneigten Verlauf erhält. Diese Kontur ist für Kurzwegdrainage günstiger als eine rein querorientierte Rille. Die Längskanten bieten einen hohen Widerstand gegen Querbewegungen. Sie gewährleisten hohe Spurhaltung. Sie unterstützen den Widerstand, der für hohe Bodenhaftung bei Kurvenfahrt erforderlich ist. Außerdem bilden sie die Kontur der im wesentlichen geradlinig verlaufenden, offenen Umfangsrillen.

Aufgrund der gewählten Blockkontur mit parallelen Blockkanten und dem vorgesehenen Blockflächenversatz mit im wesentlichen quer zur Reifenrollrichtung orientierten Flächen und Kanten liegen die Schrägkanten günstig in der Aufstandsfläche verteilt vor. Die schräg und quer zur Umfangsmittenlinie sich erstreckenden Blockkanten bilden eine hochwirksame kombinierte Schräg- und Geradverzahnung. Im Zusammenwirken mit den Lücke auf Lücke versetzten Blöcken ergibt sich ein M + S-Laufflächenprofil, das aufgrund der versetzten Blockaufstandsfläche und umgebenem Kurzweg-Rillensystem über gute Winter- und Naßlaufeigenschaften verfügt. Die Querkanten erzeugen hohe Griffigkeit in Schnee und Matsch und bilden die Voraussetzung für ein geradliniges, kurzwegiges Rillensystem. Die Längs- und Querrillenanteile, rund um jeden laufflächenmittig angeordneten Blockprofilelement, sind offen, in der Kontur einfach und daher für Selbstreinigung und Drainage sehr vorteilhaft. Dieses Rillensystem ist an kurze, verhältnismäßig geradlinige Querrillen der Schulterblockprofilelemente angeschlossen.

Diese Ausbildung gewährleistet, daß beim Ein- und Durchfahren von tiefen Wasser-/Matschpfützen durch eine hohe Volumenaufnahme und durch verhältnismäßig rasches Ableiten großer Volumina von Wasser mit hoher Sicherheit Gefahren bei Aquaplaning vermieden werden.

Die Blockform weist des weiteren ein hohes Widerstandsmoment sowohl in Laufrichtung als auch quer dazu auf. In Verbindung mit der gewählten Blockkantenkontur gewährleistet es bei Trocken- wie auch bei Naßlauf verhältnismäßig kurze Bremswege und hohe Bodenhaftung, insbesondere bei Kurvenfahrten. Hierbei wirkt sich die Anordnung der geneigt und versetzt in Eingriff gelangenden Quer- und Schrägkanten in Abrollrichtung mit verhältnismäßig langer Kantenlänge quer zur Abrollrichtung günstig aus. Sie sorgen für hohe Zugkraft und hohe Spurhaltung zugleich. Die Schrägkanten zwischen den Querkanten und deren in Umfangsrichtung wie gewählt versetzte Anordnung mindern außerdem das Reifengeräusch. Die verhältnismäßig lange Schrägkante hilft hier vorteilhaft, das Geräusch auf einem niedrigen Niveau zu halten.

Aufgrund der Anordnung der Blockprofilelemente nach Fig. 2 ergibt sich bereichsweise ein nacheinander erfolgender, stets übergreifender Bodenkontakt mit einer hohen Anzahl von Quer- und Schrägkanten. Zugleich sind dabei die Längskanten stets nacheinander in Bodenkontakt. Verbunden mit der kompakten Blockform ergeben sich hieraus die Vorteile eines M + S-Laufflächenprofils, das nicht nur griffig und hoch waserableitend, sondern zuverlässig spurhaltend und hoch bodenhaftend auch bei Kurvenfahrten ist, das verhältnismäßige geräuscharm und gut im allgemeinen Lenkverhalten ist.

Die Blockprofilelemente 70 bis 73 sind derart in einer Querreihe Q angeordnet, jedoch gegeneinander in Umfangsrichtung so versetzt, daß ein Blockprofilelement jeweils auf Lücke in Bezug zu rechts und links benachbarten Blockprofilelementen angeordnet ist. Ein Blockprofilelement steht dabei einer Querrille 76, 77 gegenüber. Auf diese Weise wird die hohe Zugkraft und Spurhaltung der Blockprofilelemente mit den vorgenannten Ausbildungs- und Anordnungsmerkmalen beibehalten. Zusätzlich werden die Wasserableitungswege von der Laufflächenmitte bis zum Schulterrand kurz und verhältnismäßig offen gestaltet. Dies verringert die Gefahr des Aufschwimmens bei Aquaplaning erheblich. Unterstützt wird diese Maßnahme durch die im wesentlichen gestuften Umfangsrillen 74, 75.

Zum Zwecke der bereichsweise elastischeren Blockausbildung sind Feineinschnitte 48, 49 vorgesehen. Sie erstrecken sich quer zur Reifenlaufrichtung. Die Einschnitte sind radial ausgebildet und reichen bis auf den Grund der Rillen. Sie beginnen an gegenüberliegenden Blocklängskanten und reichen über einen Blockbereich.

Zusätzlich sind die Blockprofilelemente 83 gemäß Fig. 4 im Schulterbereich je mit einer radialen Ausnehmung 80 versehen. Diese Einschnitte stellen in der Aufstandsfläche zustätzliche Angriffskanten und tragen mit zur verbesserten Bodenhaftung bei. Die Feineinschnitte verursachen beim Ein- und Auslauf in die Bodenkontaktfläche hochfrequente Geräusche. Sie werden dadurch entlüftet, indem an den Feineinschnitten ein Druckausgleich geschaffen wird. Ein solches M + S-Laufflächenprofil wird im folgenden beschrieben. Die Reifenlauffläche 81 nach Fig. 5 wird aus den Blockprofilelementen 82 und 83 gebildet. Die Profilrillen sind mit 84 und 85 bezeichnet. Die genannten Blockprofilelemente weisen jeweils Feineinschnitte 86 auf, die zickzackförmig radial tief in das Blockelement eingearbeitet sind. Sie erstrecken sich quer zur Umfangsrichtung. Ein Ende des Feineinschnitts mündet in einer Profilrille.

Quer zu diesem Feineinschnitt 86 ist Druckausgleichskanal 87 angeordnet. Seine Breite b ist sechsfach breiter als die des Feineinschnitts. Die Kanaltiefe t ist kleiner als die des Feineinschnitts. Nach Fig. 6 beträgt die Feineinschnittiefe T des Feineinschnitts 6 mm und die Tiefe t des Druckausgleichskanal 3 mm.

Die Breite B des Feineinschnitts beträgt 0,6 mm und die Breite b des Druckausgleichkanals beträgt 3 mm. Der Druckausgleichkanal ist im wesentlichen rinnenförmig ausgebildet.

Bei einer bevorzugten Ausführungsform des Druckausgleichkanals kann dieser doppelt bis zehnfach breiter als ein Feineinschnitt von etwa 0,5 bis 0,6 mm ausgebildet vorliegen. Die Tiefe des Kanals soll mindestens 1 mm betragen, sie kann bis zu dreiviertel der Feineinschnittiefe reichen.

Durch diesen Kanal ist eine wirksame Entlüftung und Durckreduzierung im Feineinschnitt gewährleistet. Bevorzugt endet der Druckausgleichkanal in einer das Profilelement begrenzenden Profilrille. Der Kanal kann jedoch auch in der Profillauffläche enden. Er kann als Volumenausgleichskanal eines oder mehrerer Feineinschnitte dienen.

Bevorzugt weist der Druckausgleichkanal eine Überstandslänge auf; d. h. er erstreckt sich quer oder schräg zum Feineinschnitt etwas über diesen hinaus.

Druckausgleich und Entlüftung erfolgen insoweit zu beiden Seiten des Feineinschnitts. Auf diese Weise ist der Kanal in der Aufstandsfläche nicht auf der Gesamtlänge geschlossen, sondern bleibt funktionsfähig offen erhalten.

Der Druckausgleichskanal 87 nach Fig. 6 ist über den Feineinschnitt 86 hinaus etwas verlängert ausgebildet. Diese Überstandslänge ist mit 88 bezeichnet. Sie beträgt 1 bis 3 mm. Der Luftkompressionseffekt im Feineinschnitt verursacht ohne Druckausgleich ein hochfrequentes Zischgeräusch von mehr als 1000 Hz. Der hohe Kompressionsdruck wird durch den in Querrichtung zum Feineinschnitt angeschlossenen Druckausgleichkanal, der im wesentlichen in Umfangsrichtung vorliegt, wesentlich reduziert.

Dies ist insbesondere bei Neureifen von Bedeutung. Das Ausgangsvovolumen $V_O$ der Feineinschnitte 86 weist hier den größten Wert auf. Die Reifenoberfläche ist außerdem verhältnismäßig glatt. Der Geräuschanteil aus Feineinschnitten ist außerdem bei glatten und/oder feuchten Fahrbahnen sehr hoch. Durch den Druckausgleichkanal 87 erhält man hier eine wesentliche Geräuschreduzierung.

Bei den Blockprofilelementen 92 gemäß Fig. 7, sind die Feineinschnitte mit 94 bezeichnet. Die Druckausgleichkanäle 96 sind hierbei unter einem Winkel γ von bis zu 45°, gemessen zur Umfangsrichtung x-x, angeordnet. Die Schrägstellung kann durch Form und Anordnung der Blockprofilelemente bedingt sein. Der Druckausgleichskanal 96 kann auch zwei oder mehrere Feineinschnitte entlüften. Der Druckausgleichkanal ist bei jeder Art von Feineinschnitt denkbar. So sind beispielsweise die Blockprofilelemente 97 und 98 nach Fig. 8 mit geraden Feineinschnitten 99 versehen. Der Kanal 96 kann als Druck- wie auch als Volumenausgleichskanal dienen.

Ein Aufstandsprofil eines Fahrzeugluftreifens mit einem M + S-Laufflächenprofil ist in Fig. 4 dargestellt. Es zeigt sowohl die Grundform der Blockprofilelemente als auch die gestufte Queranordnung der Blockprofilelemente wie auch die längs und quer offene Rillenausbildung. Deutlich erkennbar sind die Feineinschnitte und Druckausgleichskanäle, die zusätzliche Kanten und Öffnungen zu den zahlreichen Blockkanten des neuen Profils liefern. Blockform, Blockanordnung und Feineinschnittentlüftung sind charakteristisch für das neue Winterreifenprofil.

**Patentansprüche**

1. M + S-Laufflächenprofil an Fahrzeugluftreifen in Gürtel/Radialkarkassenbauart, das aus zur Umfangsrichtung quer orientierten Blockprofilelementen (70 - 73; 82, 83; 92, 93) besteht, die durch breite Umfangs- und Querrillen (74 - 77) mit durchgehend offenem Verlauf voneinander getrennt sind und in zwei Blockumfangsreihen des Laufflächenmittenbereichs und je einer Blockumfangs reihe des Laufflächenschulterbereichs vorliegen und in schrägen Querreihen (Q) und stufenförmig versetzt zueinander angeordnet sind, wobei jedes Blockprofilelement aus in Umfangsrichtung zueinander versetzten Blockabschnitten (54, 56) gebildet ist und überwiegend in Umfangsrichtung und quer zur Umfangsrichtung verlaufende Blockkanten (51, 52, 59; 51', 52', 59') aufweist und mit Feineinschnitten (48, 49; 86; 94) versehen ist, wobei die Block-Profilelemente einen rhombusartigen Umriß aufweisen und je eine Aufstandsfläche (50) bilden, die sich aus zwei rechteckigen Außenbereichen (54, 56) mit seitlichen nasenförmigen Ansätzen (57, 58), mit in zur Umfangsrichtung parallelen Längskanten (59, 59') sowie mit zur Umfangsrichtung quer verlaufenden parallelen Querkanten (51, 51', 52, 52') als Vorder- und Hinterkante und einem Zwischenbereich (55) mit ebenfalls zueinander parallelen Blockkanten (53, 53') zusammensetzen, wobei die Feineinschnitte derart angeordnet sind, daß sie zumindest teilweise in eine nächst vorliegende Umfangsrille (74, 75) einmünden, dadurch gekennzeichnet, daß eine Querkante (51, 52, 51', 52') eines Blockprofilelements nicht fluchtend mit einer weiteren Querkante eines weiteren Blockprofilelements derselben oder nächstbenachbarten Querreihe vorliegt, daß der die Außenbereiche (54, 56, 57, 58) des Blockprofilelements (70 - 73; 82, 83; 92, 93) verbindende Zwischenbereich (55) mit in zur Umfangsrichtung schrägen, unter einem Winkel von 10 - 45 Grad geneigten parallelen Blockkanten (53, 53'; 68, 69; 78, 79) versehen ist, daß die schrägen Blockkanten (68, 69) der inneren Blockprofilelemente (70, 71) der Blockumfangsreihen des Laufflächenmittenbereichs gleiche Neigung und Neigungsrichtung und die schrägen Blockkanten (78, 79) der äußeren Blockprofilelemente (72, 73) der Blockumfangsreihen in den Laufflächenschulterbereichen im Vergleich zu den inneren Blockprofilelementen (70, 71) gleiche Neigung, jedoch entgegensetzte Neigungsrichtung aufweisen und daß die Aufstandsfläche (50) der Blockprofilelemente im wesentlichen gleich groß, die tatsächliche Oberfläche der in den Laufflächenschulterbereichen angeordneten äußeren Blockprofilelemente (72, 73) jedoch um das etwa 1,5 bis 2-fache größer ist als die der inneren Blockprofilelemente (70, 71), wobei sich der axial äußere Querflächenteil (66, 67) in den Seitenbereich der Reifenschulter hineinerstreckt.

2. Lauffächenprofil nach Anspruch 1, dadurch gekennzeichnet, daß die Blockprofilelemente (70 - 73) in der Querreihe (Q) derart in Umfangsrichtung gegeneinander versetzt angeordnet sind, daß von einem äußeren Blockprofilelement (72) aus betrachtet das übernächst benachbarte innere Blockprofilelement (71) in der Umfangsrichtung weniger versetzt ist im Vergleich zum nächstbenachbarten inneren Blockprofilelement (70) und daß das am weitesten entfernte äußere Blockprofilelement (73) der Querreihe (Q) in der Umfangsrichtung weiter versetzt angeordnet ist im Vergleich zum übernächstbenachbarten inneren Blockprofilelement (71).

3. Laufflächenprofil nach Anspruch 1 oder 2, dadurch gekennzeichnet, daß die Blockprofilelemente der Querreihe (Q) in Bezug auf benachbarte Blockprofilelemente jeweils auf Lücke angeordnet sind, wobei ein Blockprofilelement (71) im wesentlichen mittig einer Querrille (77) gegenüber angeordnet ist.

4. Laufflächenprofil nach Anspruch 1 bis 3, dadurch gekennzeichnet, daß die schrägen Blockkanten (53, 53'; 68, 69; 78, 79) unter einem Winkel von 15 bis 30 Grad zur Umfangsrichtung geneigt sind.

5. Laufflächenprofil nach Anspruch 1 bis 4, dadurch gekennzeichnet, daß sich die radialen Feineinschnitte (48, 49) der Blockprofilelemente (70 - 73) quer zur Umfangsrichtung erstrecken und jeweils an gegenüberliegenden Blocklängsseiten und versetzt zueinander angeordnet sind.

6. Laufflächenprofil nach Anspruch 5, dadurch gekennzeichnet, daß ein quer oder bis zu 45 Grad schräg zum Feineinschnitt (86) angeordneter, im wesentlichen in Umfangsrichtung sich erstreckender, an den Feineinschnitt angeschlossener Druckausgleichkanal (87) vorliegt.

7. Laufflächenprofil nach Anspruch 6, dadurch gekennzeichnet, daß der Druckausgleichkanal (87) eine Überstandslänge (88) aufweist, die quer oder schräg über den Feineinschnitt hinaus verlängert ist.

8. Laufflächenprofil nach Anspruch 6 und 7, dadurch gekennzeichnet, daß mehr als ein Feineinschnitt an einen Druckausgleichkanal angeschlossen ist.

9. Laufflächenprofil nach Anspruch 1 bis 8, dadurch gekennzeichnet, daß die Längsseiten (59, 59') der Blockprofilelemente (70 - 73, 82, 83, 92, 93, 97, 98) gestuft (57, 58) gezackt oder gepfeilt (100) profiliert sind.

**Claims**

1. M + S tread surface profile on pneumatic vehicle tyres of a belt and radial carcase type of construction, which profile comprises block profile elements (70 - 73; 82, 83; 92, 93) which extend transversely relative to the circumferential direction and are separated from one another by wide circumferential and transverse grooves (74 - 77), which extend in a continuously open manner, the grooves being provided in two block circumferential lines in the central region of the tread surface and in one respective block circumferential line in the shoulder region of the tread surface and being disposed in inclined transverse lines (Q) and offset relative to one another in a step-like manner, wherein each block profile element is formed from block portions (54, 56), which are offset relative to one another in the circumferential direction, each block profile element having block edges (51, 52, 59; 51', 52', 59'), which extend predominantly in the circumferential direction and transversely relative to the circumferential direction, and being provided with fine incisions (48, 49; 86; 94), wherein the block profile elements have a rhomboid-shaped configuration and each form a supporting surface (50), which surfaces comprise two rectangular outer regions (54, 56) having lateral, nose-shaped projections (57, 58), having longitudinal edges (59, 59',) which lie parallel to the circumferential direction, and having parallel transverse edges (51, 51', 52, 52') which extend transversely relative to the circumferential direction and form the front and rear edges, and which surfaces also comprise an intermediate region (55) having block edges (53, 53',) which equally lie parallel to one another, wherein the fine incisions are disposed in such a manner that they extend at least partially into a next adjacent circumferential groove (74, 75), characterised in that one transverse edge (51, 52, 51', 52') of a block profile element is not in alignment with an additional transverse edge of an additional block profile element of the same or next adjacent transverse line, in that the intermediate region (55), which connects the outer regions (54, 56, 57, 58) of the block profile element (70 - 73; 82, 83; 92, 93), is provided with parallel block edges (53, 53'; 68, 69; 78, 79) which are inclined relative to the circumferential direction and slope at an angle of 10 - 45 degrees, in that the inclined block edges (68, 69) of the inner block profile elements (70, 71) of the block circumferential lines of the central region of the tread surface have the same inclination and direction of inclination as the inner block profile elements (70, 71), and the inclined block edges (78, 79) of the outer block profile elements (72, 73) of the block circumferential lines in the shoulder regions of the tread surface, when compared with the inner block profile elements, have the same inclination, but the opposite direction of inclination, and in that the supporting surface (50) of the block profile elements is substantially the same size as that of the inner block profile elements (70, 71), but the actual surface of the outer block profile elements (72, 73) disposed in the shoulder regions of the tread surface is substantially 1,5 to 2 times greater than that of the inner block profile elements, the axially outer transverse surface portion (66, 67) extending into the lateral region of the tyre shoulder.

2. Tread surface profile according to claim 1, characterised in that the block profile elements (70 - 73) in the transverse line (Q) are offset relative to one another in the circumferential direction in such a manner that, when viewed from an outer block profile element (72), the next but one adjacent inner block profile element (71) is less offset in the circumferential direction than the next adjacent inner block profile element (70), and in such a manner that the furthest remote, outer block profile element (73) of the transverse line (Q) is more offset in the circumferential direction than the next but one adjacent, inner block profile element (71).

3. Tread surface profile according to claim 1 or 2, characterised in that the block profile elements of the transverse line (Q) are in staggered disposition relative to respective adjacent block profile elements, one block profile element (71) being disposed substantially centrally opposite a transverse groove (77).

4. Tread surface profile according to claims 1 to 3, characterised in that the inclined block edges (53, 53'; 68, 69; 78, 79) slope at an angle of from 15 to 30 degrees relative to the circumferential direction.

5. Tread surface profile according to claims 1 to 4, characterised in that the radial fine incisions (48, 49) of the block profile elements (70 - 73) extend transversely relative to the circumferential direction and are disposed on opposite block longitudinal ends and offset relative to one another.

6. Tread surface profile according to claim 5, characterised in that a pressure-equalising channel (87), which is disposed transversely, or up to 45 degrees inclinedly, relative to the fine incision (86), extends substantially in the circumferential direction and communicates with the fine incision.

7. Tread surface profile according to claim 6, characterised in that the pressure-equalising channel (87) has a protruding length (88) which protrudes transversely or inclinedly beyond the fine incision.

8. Tread surface profile according to claims 6 and 7, characterised in that more than one fine incision communicates with a pressure-equalising channel.

9. Tread surface profile according to claims 1 to 8, characterised in that the longitudinal ends (59, 59') of the block profile elements (70 - 73, 82, 83, 92, 93, 97, 98) have a jagged profile in the form of steps (57, 58) or arrow-heads (100).

**Revendications**

1. Profil de surface de roulement pour bandage pneumatique de véhicules pour neige et boue du type à carcasse radiale/ceinture, qui se compose de crampons de sculpture (70 - 73; 82, 83; 92, 93) orientés perpendiculairement à la direction périphérique, qui sont séparés l'un de l'autre par des rainures périphériques et transversales larges (74 - 77) ayant un profil ouvert en continu et qui sont présents selon deux rangées périphériques situées dans la zone médiane de la surface de roulement et respectivement selon une rangée d'épaulements, et qui sont disposés avec un décalage mutuel en forme de gradins dans des rangées transversale en oblique, chaque crampon de sculpture est constitué de parties de crampon (54, 56) décalées entre elles dans la direction périphérique et comporte des bords de crampon (51, 52, 59; 51', 52', 59') orientés en prépondérance dans la direction périphérique et perpendiculairement à la direction périphérique et est pourvu de fines entailles (48, 49; 86; 94), les crampons de sculpture ont un contour en forme de losange et forment chacun une surface d'appui (50), qui se compose de deux zones extérieures rectangulaires (54, 56) pourvues d'appendices latéraux en forme de nez (57, 58), de bords longitudinaux (59, 59') parallèles à la direction périphérique ainsi que de bords transversaux parallèles (51, 51', 52, 52') orientés perpendiculairement à la direction périphérique et constituant des bords avant et des bords arrière, ainsi qu'une zone intermédiaire (55) comportant des bords de crampon (53, 53') également parallèles entre eux, les fines entailles étant disposées de telle sorte qu'elles débouchent au moins en partie dans une rainure périphérique (74, 75) immédiatement adjacente, caractérisé en ce qu'un bord transversal (51, 52, 51', 52') d'un crampon de sculpture n'est pas placé en coïncidence avec un autre bord transversal d'un autre crampon de sculpture de la même rangée transversale ou d'une rangée transversale immédiatement adjacente, en ce que la zone intermédiaire (55) reliant les zones extérieures (54, 56, 57, 58) du crampon de sculpture (70 - 73; 82, 83; 92, 93) est pourvue de bords de crampon (53, 53'; 68, 69; 78, 79) parallèles, inclinés d'un angle de 10 à 45° et en oblique par rapport à la direction périphérique, en ce que les bords en oblique (68, 59) des crampons de sculpture intérieurs (78, 71) de la rangée périphérique de crampons de la zone centrale de la surface de roulement ont la même inclinaison et la même direction d'inclinaison et les bords en oblique (78, 79) des crampons de sculpture extérieurs (72, 73) de la rangée périphérique de crampons situés dans les zones d'épaulements de la surface de roulement ont la même inclinaison que les crampons de sculpture intérieurs, mais cependant une direction d'inclinaison opposée, et en ce que les surfaces d'appui (50) des crampons de sculpture ont sensiblement la même grandeur, tandis que la surface effective des crampons de sculpture extérieurs (72, 73) disposés dans les zones d'épaulements de la surface de roulement est cependant environ 1,5 à 2 fois plus grande que celles des crampons de sculpture intérieurs (70, 71), la partie axialement extérieure de surface transversale (66, 67) s'étendant jusque dans la zone latérale de l'épaulement de pneumatique.

2. Profil de surface de roulement selon la revendication 1, caractérisé en ce que les crampons de sculpture (70 - 73) se trouvant dans la rangée transversale (Q) sont décalés entre eux dans la direction périphérique de telle sorte que, en considération d'un crampon de sculpture extérieure (72), le crampon de sculpture intérieur (71) placé en seconde position soit moins décalé dans la direction périphérique que le crampon de sculpture intérieur immédiatement adjacent (70) et que le crampon de sculpture extérieur (73) le plus éloigné dans la rangée transversale (Q) soit plus décalé dans la direction périphérique que le crampon de sculpture intérieur (71) venant en seconde position.

3. Profil de surface de roulement selon la revendication 1 ou 2, caractérisé en ce que les crampons de sculpture de la rangée transversale (Q) sont disposés chacun de façon espacée par rapport à des crampons de sculpture adjacents, un crampon de sculpture (71) étant disposé par contre sensiblement au milieu d'une rainure transversale.

4. Profil de surface de roulement selon les revendications 1 à 3, caractérisé en ce que les bords obliques de crampons (53, 53', 68, 69; 78, 79) sont inclinés d'un angle de 15 à 30° par rapport à la direction périphérique.

5. Profil de surface de roulement selon les revendications 1 à 4, caractérisé en ce que les fines entailles radiales (48, 49) des crampons de sculpture (70 - 73) sont orientées transversalement par rapport à la direction périphérique et sont disposées respectivement sur les côtés longitudinaux opposés des crampons en étant décalées les unes par rapport aux autres.

6. Profil de surface de roulement selon la revendication 5, caractérisé en ce qu'il est prévu un canal d'égalisation de pression (87), disposé transversalement ou bien en oblique jusqu'à 45° par rapport à l'entaille fine (86), en s'étendant sensiblement suivant la direction périphérique et en étant relié à l'entaille fine.

7. Profil de surface de roulement selon la revendication 6, caractérisé en ce que le canal d'égalisation de pression (87) comporte un prolongement (88) qui s'étend transversalement ou en oblique au delà de l'entaille fine.

8. Profil de surface de roulement selon les revendications 6 et 7, caractérisé en ce que plus d'une entaille fine est reliée au canal d'équilibrage de pression.

9. Profil de surface de roulement selon les revendications 1 à 8, caractérisé en ce que les côtés longitudinaux (59, 59') des crampons de sculpture (70 - 73, 82, 83, 92, 93, 97, 98) sont pourvus d'un profil étagé (57, 58), dentelé ou en forme de flèche (100).

Fig.1

Fig.3

Fig.2

Fig.6

Fig.5

Fig.4

Fig.7

Fig.8